# FASCICULE DE BREVET EUROPEEN

(11) **EP 1 428 174 B1**
(45) Date de publication et mention de la délivrance du brevet: **05.11.2008**
(21) Numéro de dépôt: 01969914.9
(22) Date de dépôt: 18.09.2001
(51) Int. Cl.: G06K 19/06

(54) **PROCEDE DE CODAGE DE L'INFORMATION PAR DES SYMBOLES GRAPHIQUES**
VERFAHREN ZUR INFORMATIONSKODIERUNG MITTELS GRAPHISCHEN SYMBOLEN
METHOD FOR CODING INFORMATION WITH GRAPHIC SYMBOLS

(43) Date de publication de la demande: 16.06.2004
(73) Titulaire: ALPHACODE, 78114 Magny les Hameaux (FR)
(72) Inventeur: Rivaillier, Jacques, 78114 Magny les Hameaux (FR)
(74) Mandataire: Breese, Pierre
(86) Numéro de dépôt international: PCT/FR2001/002889
(87) Numéro de publication internationale: WO 2003/025847

(56) Documents cités:
- FR-A- 2 769 107
- FR-A- 2 809 210

## Description

### PRESENTATION

L'invention se rapporte à un procédé de représentation de l'information, par exemple, écriture sur un support papier d'un fichier mise en oeuvre dans un ordinateur.

Ce procédé est appelé « DOTE ».

Son but est de représenter les fichiers informatiques, partiellement ou en totalité, sur un support matériel quelconque, octet par octet, de manière visible par l'Homme et/ ou par la machine.

Il est également possible d'utiliser dans les traitements informatiques (en machine ou en transmission), non plus l'octet lui-même, mais son image (également traduite sous forme d'octets) qui représente l'octet d'origine. Un logiciel ou un dispositif électronique reconvertira cette image en l'octet d'origine.

Pour ce faire, il est important de mettre en oeuvre un procédé qui minimise les adaptations des matériels en écriture, en lecture, voire en transmission.

### EXPLICATION du procédé DOTE.

En informatique, toutes les informations sont finalement codées sous forme d'octets qui ont chacun une valeur comprise entre 0 et 255.

Le procédé DOTE fait correspondre à chacune de ces valeurs un symbole particulier. L'ensemble de ces 256 symboles correspond à une notion d'alphabet ou de police de caractères.

L'originalité de l'invention réside dans la construction de ces représentations et les avantages qui lui sont associés.

La représentation DOTE est du type 2D (l'information est codée sur les 2 dimensions, x et y), ce qui la diffère de celle des codes à 1 dimension comme les codes barres.

Chaque octet est représenté, dans le procédé DOTE, par son symbole correspondant qui est indépendant de la taille et du contenu du fichier, contrairement à la grande majorité des codes bidimensionnels (2D) qui représentent chaque ensemble d'information par une structure graphique globale spécifique. Ce sont des codes « globaux » contrairement à la présente conception qui est « alphabétique ».

L'écriture codée qui applique le mieux le principe des symboles indépendants est l'écriture « ECO » décrite, par l'auteur du présent document, dans un premier brevet en 1979.

La présente invention vient, notamment, compléter cette écriture dont elle améliore les performances.

### Remarque :

Nous utiliserons le terme **Dot** plus connu pour désigner le Point Graphique Elémentaire des écritures codées ECO ou DOTE. Il est représenté sur support par des pixels.

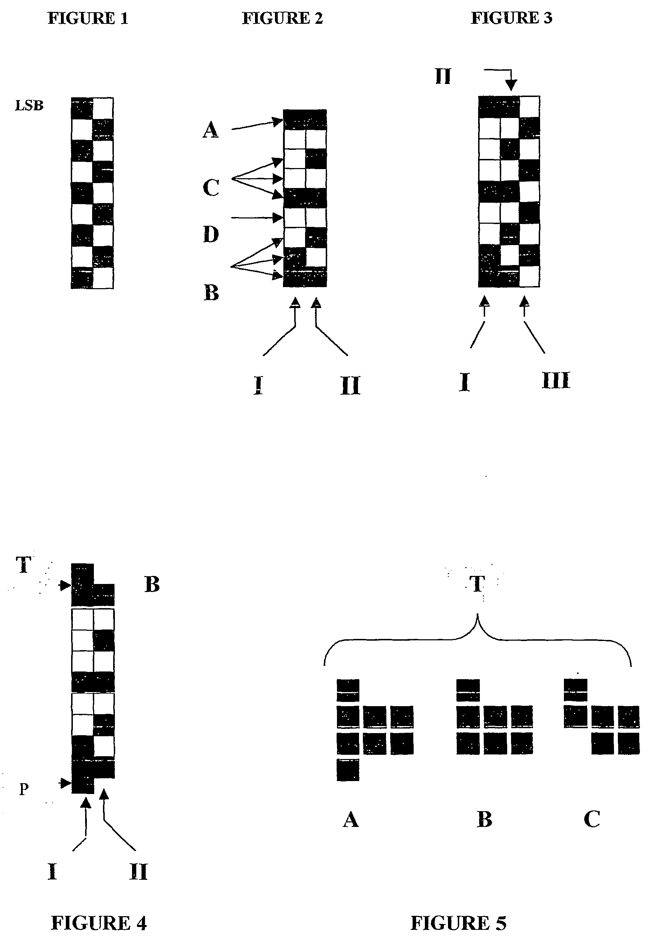

### Rappel du principe de l'écriture « ECO » (figure 1).

Cette dernière est formée de 1 ou 2 colonnes de 9 Dots chacune. (Le Dot est un Point Graphique Elémentaire généralement noir ou blanc).

Composition de la première colonne à gauche :
- le premier Dot en haut est toujours noir. Il n'est pas pondéré (significatif) et sert à repérer le caractère.
- le second juste en dessous possède la valeur « 1 » s'il est noir et « 0 » s'il est blanc.
- le troisième encore en dessous possède la valeur « 2 » s'il est noir et « 0 » s'il est blanc.
- le suivant possède la valeur « 4 » s'il est noir et « 0 » s'il est blanc, et ainsi de suite pour les valeurs « 8 », puis « 16 », « 32 », « 64 » et « 128 » s'ils sont noirs ou nulle s'ils sont blancs.

Ainsi le symbole de la figure 1 représente la valeur :
1*0 + 2*1 + 4*0 + 8*1 + 16*0 + 32*1 + 64*0 + 128*1 = 170

Si tous les Dots significatifs sont blancs la valeur représentée est nulle.

Dans le cas opposé où tous les Dots sont noirs, la valeur correspondante est 255.

Il est ainsi possible de coder toutes les valeurs que peut prendre un octet de 0 à 255.

La dernière colonne à droite (figure 1) est facultative. En cas de présence, elle est la complémentaire de la première. Les Dots noirs de la première sont blancs dans la seconde et vice versa.

### Limites rencontrées par le procédé précédent.

Quand elle est utilisée, la redondance d'ordre 2 des caractères « ECO » (figure1) permet de corriger certains défauts d'écriture, mais elle se révèle parfois insuffisante et double la surface de l'écriture.

De plus, il convient dans bien des cas d'améliorer la séparation des caractères successifs, ainsi que le calcul de leur inclinaison.

Enfin, certaines applications comme la traçabilité exige de pouvoir coder séparément plusieurs alphabets de 256 symboles (ou police de caractères); notamment « l'alphabet courant » pour représenter les octets et « l'alphabet d'index » pour expliciter les formats. Le procédé ECO ne le permet pas.

### Le procédé « DOTE » repousse ces limites.

Il **complète le caractère** ECO simple (1 colonne) ou double (2 colonnes dont un complémentaire) par **une colonne adjacente** à droite ou de préférence à gauche, suivant la description illustrée figure 2 , dont :
• La partie haute (partie A, figure 2) est toujours noire. Sa hauteur peut avoir plusieurs tailles ; par exemple **0,5** Dot si le symbole complet est constitué de 2 colonnes I et II (figure 2), ou une hauteur de **1** Dot si le symbole est défini par 3 colonnes I, II et III comme en figure 3.
Ainsi la surface du premier « Dot » (en haut dit Dot de positionnement) de la colonne I est accrue et améliore sa détection. Ce Dot imprimé en premier est souvent tronqué et parfois difficile à détecter.
• La partie basse (partie B, figure 2) est noire, et présente différentes hauteurs (2, 3 et 4 Dots, par exemple).
Ces différentes hauteurs servent à coder le type d'alphabet. Par exemple, la hauteur 2 caractérise « l'alphabet courant » qui code les 256 valeurs d'un octet, et la hauteur 3 signale « l'alphabet d'index » qui explicite les **champs** des formats de messages.
La partie basse étant au moins le double de la partie haute, il est possible de déterminer le haut et le bas de chaque caractère.
D'autres types de codage des 3 Dots peuvent être utilisés, mais la partie B doit rester distincte de A.
• La partie centrale (partie C, figure 2) est composée de trois Dots qui servent à coder le nombre de Dots noirs significatifs (hors Dot de positionnement : de 0 à 7) de la colonne II (figure 2). Elle permet le contrôle de la construction du symbole.
Le plus haut des trois prend la valeur « 1 » s'il est noir et « 0 » s'il est blanc, le suivant en dessous, prend la valeur « 2 » s'il est noir et « 0 » s'il est blanc et le dernier la valeur « 4 » s'il est noir et « 0 » dans le cas contraire. Il est ainsi possible de coder des valeurs de 0 à 7 à l'aide de ces échelles de pondération.
Le tableau suivant fournit un exemple de représentation du nombre de Dots noirs de la colonne II :

| Nombre de Dots noirs | valeur représentée en « C » |
|---|---|
| 0 | 7 |
| 1 | 1 |
| 2 | 2 |
| 3 | 3 |
| 4 | 4 |
| 5 | 5 |
| 6 | 6 |
| 7 | 0 |
| 8 | 0 |

Il est aisé de sécuriser la lecture des symboles comportant 7 ou 8 Dots noirs en exploitant le Dot de parité et l'absence d'intervalle blanc dans le cas de 8 Dots.
Ceci permet de limiter à 3 Dots sur le colonne I le codage du nombre de Dots noirs du colonne II. La partie B peut alors être porter à 3 Dots (pour coder d'autres ensembles de symboles), tout en restant différente de la partie A et permettre ainsi la détection haut/bas des symboles (figure 2).
• La partie D de la figure 2 est constituée d'un Dot de parité. De préférence noir si le nombre d'intervalles noirs de la colonne II est impair. Elle permet la vérification de la construction du symbole.

En se basant sur la figure 2, il est aisé de constater que la **colonne I** ainsi ajoutée par rapport à ECO, joue également le rôle d'intercaractère. Elle permet d'accroître ou de faciliter :
- La détermination du sens haut/bas de chaque **symbole** (appelé aussi **caractère**), puisque les parties A et C sont différentes.
- La sécurité de reconnaissance des caractères, en précisant le nombre de Dots significatifs (hors Dot de positionnement) et la parité du nombre d'intervalles noirs de la colonne II qui servent à vérifier le résultat de lecture et permettent de corriger certains défauts d'écriture ou de saisie.
- La séparation des caractères par détection de cette colonne I appelée aussi intercaractère.
- Le calcul de la hauteur du symbole qui correspond à la mesure du nombre de points d'image (pixels) compris entre le haut de la partie A et le bas de la partie B qui existent toujours quel que soit le symbole. La connaissance de sa hauteur en pixels, permet l'adaptation automatiquement à la taille de l'écriture et de celle des Dots.
- Le calcul de l'inclinaison de chaque caractère, par détection puis reconstitution et redressement de cette colonne I.
- La détermination du sens de lecture gauche-droite ou inverse pour chaque caractère, si le colonne intercaractère du procédé DOTE est, par exemple, toujours placé à gauche.
- Le type de représentation des symboles dont la hauteur de la partie A code une police de caractères donnant la priorité à :
   - la densité à l'aide de caractères 2 colonnes (I & II : figure 2) pour un gain de place ou,
   - la fiabilité à l'aide de caractères 3 colonnes (I, II & III figure 3).

### AMELIORATION DU PROCEDE DOTE DECRIT PRECEDEMMENT.

Dans le présent document, nous présentons une amélioration consistant en l'ajout d'un Dot (Point Graphique Elémentaire) au **sommet** et à la **base** de la première colonne dite intercaractère qui permet le contrôle de la construction du symbole (appelé aussi caractère) correspondant.

Le sommet du symbole est souvent désigné par tête et la base par pied du caractère.

La première colonne intercaractère comporte alors 2 Dots de plus que la ou les autres colonnes du symbole. Ces Dots peuvent être d'une taille différente (en pixels) des autres Dots constituant le symbole (figure 4). Cette nouvelle construction améliore de façon appréciable les performances du procédé DOTE précédent.
1. La présence d'une première colonne plus longue favorise :
   ➢ la détection des hauts et des bas des rangées de caractères,
   ➢ le calcul de la verticalité des colonnes de chaque caractère,
   ➢ la séparation des caractères,
   ➢ le calcul de la hauteur de chaque caractère et le nombre de pixels par Dot (normalisation de la taille des caractères).
2. La tête du caractère est plus complète que dans le procédé d'origine. Elle peut être construite de plusieurs façons de manière à élargir les possibilités de codage intrinsèque de chaque caractère en plus du codage habituel. Plusieurs constructions sont données en figure 5. La détection d'une des 3 formes possibles permet le codage de 3 polices de caractères supplémentaires ou d'affecter 3 propriétés différentes à chaque caractère comme par exemple l'une des 3 couleurs : rouge, verte et bleue, sans accroître le nombre de caractères donc la surface de représentation.
3. L'allongement de la colonne I permet un empilement jointif et plus précis des rangées de caractères tout en assurant une détection aisée des différentes rangées. Cela se traduit par une amélioration de la densité et une réduction du temps de traitement.

### Mise en oeuvre du procédé « DOTE » sur machines.

La mise en oeuvre de ce procédé sur les machines d'impression ou de gravure est obtenue par le chargement de l'équivalent d'une ou plusieurs polices de symboles de type « DOTE ».

Les machines de lecture utilisent des logiciels de reconnaissance (OCR) de ces différents symboles.

Dans ces conditions, la correspondance entre octets écrits, puis lus et les octets du ficher représenté est totale (biunivoque).

Le codage des ensembles de symboles est assuré par la partie B du colonne intercaractère « I » (figures 2 et 3). Les «ensembles de symboles d'index » par exemple, dont les éléments servent à qualifier les champs d'information et non plus à représenter les octets, sont mis en oeuvre par des logiciels d'application généralement liés au format de l'information utilisée dans le domaine. Ces formats peuvent, à leur tour, faire l'objet de brevets.

Il est également possible que les logiciels évoqués précédemment soient remplacés dans les machines notamment dédiées à une application, par des circuits électroniques programmables ou non qui intègrent les moyens d'écriture, de lecture, de transmission et d'exploitation utilisant le procédé DOTE.

Ces appareils deviennent alors des « machines DOTE » auxquelles s'appliquent les revendications ci-après.

Le présent procédé DOTE permet également de représenter en machine les « octets classiques » origine par des « octets images », eux-mêmes de 2 ou 3 octets classiques. Leur détection lorsque les octets images sont mixés avec les octets classiques se fait par analyse de leur construction et/ou par formatage.

La taille des fichiers ou partie de fichiers ainsi représentés est 2 à 3 fois supérieure aux fichiers d'origine, mais les fichiers « d'octets images » possèdent des propriétés intéressantes, notamment dans les applications de sécurisation de l'information et plus particulièrement, lors des impressions ou restitutions sécurisées sur des supports physiques d'informations, comme les impressions sur papier ou les restitutions sonores, facilitant le passage de l'un à l'autre.

## Revendications

1. Procédé de codage de l'information basé sur des symboles graphiques, indépendants les uns des autres, **caractérisés en ce qu'**ils contiennent des éléments de description et de contrôle de leur propre construction, et **en ce qu'**ils représentent des nombres, des séries de nombres ou des identifiants, et sont constitués d'au moins deux colonnes adjacentes composées de Points Graphiques Elémentaires affectés de valeurs qui sont fonction de la position ou zone qu'ils occupent sur la colonne.

2. Procédé de codage de l'information selon la revendication 1, **caractérisé en ce que** plusieurs zones de codage coexistent au sein de chaque symbole et notamment sur une même colonne, avec des significations individuelles, définies au moyen d'échelles de valeurs avec leurs codifications.

3. Procédé de codage de l'information selon les revendications 1 et 2, **caractérisé en ce que** les zones précédentes possèdent des échelles de variation de valeurs binaires et croissantes dans le sens du haut vers le bas.

4. Procédé de codage de l'information selon les revendications 1, 2 et 3, **caractérisé en ce qu'**une colonne au moins, porte des éléments de description et de contrôle du symbole considéré, dont le nombre de Points Graphiques Elémentaires et la parité du nombre d'intervalles de la colonne qui codent l'information.

5. Procédé de codage de l'information selon les revendications précédentes, **caractérisé en ce que** les symboles sont composés de trois colonnes, la troisième codant différemment l'information de la seconde.

6. Procédé de codage de l'information selon les revendications 1, 2, 3, 4 et 5 **caractérisé en ce que** la première colonne comporte en haut et en bas un Point Graphique Elémentaire de taille variable, de plus que les autres colonnes du même symbole.

7. Procédé de codage de l'information selon les revendications 1, 2, 3, 4, 5 et 6, **caractérisé en ce que** la partie haute (A) d'un symbole ait plusieurs représentations différentes pour désigner chacune un groupe de symboles différent.

8. Procédé de codage de l'information selon les revendications précédentes **caractérisé en ce qu'**une représentation de la tête de symbole comporte en première colonne deux Points Graphiques Elémentaires, une autre trois Points et encore une autre quatre, de même taille ou de taille différente de ceux des colonnes suivantes.

9. Procédé de codage de l'information selon les revendications 1, 2, 3 et 4, **caractérisé en ce que** les Points Graphiques Elémentaires sont de n couleurs différentes ou de n nuances de gris constituant une base de numération de base n, n étant un entier supérieur ou égal à 2.

10. Procédé de codage de l'information, selon l'une des revendications précédentes, **caractérisé en ce que** les colonnes I, II et III, sont de largeurs différentes les unes par rapport aux autres et différemment espacées.

11. Procédé de codage de l'information selon l'une des revendications précédentes, **caractérisé en ce que** chaque point graphique élémentaire correspond à un bit dans une représentation en machine.

## Claims

1. An information encoding method based on graphic symbols, independent from each other, **characterized in that** they include elements for the description and the checking of their own construction and **in that** they represent numbers, series of numbers or identifiers and are constituted of at least two adjacent columns composed of Elementary Graphic Points, which values depending on the position or the area they are in, in the column, are associated to.

2. An information encoding method according to claim 1, **characterized in that** several encoding areas exist within each symbol and more particularly in the same column, with individual significations defined by value scales with the codifications thereof.

3. An information encoding method according to claims 1 and 2, **characterized in that** the preceding areas have variation scales of binary values increasing from top to bottom.

4. An information encoding method according to claims 1, 2 and 3, **characterized in that** at least one column includes elements for the description and the checking of the symbol concerned, among which the number of Elementary Graphic Points and the parity of the number of intervals of the information encoding column.

5. An information encoding method according to the preceding claims, **characterized in that** the symbols are composed of three columns, the third column encoding information differently from the second one.

6. An information encoding method according to claims 1, 2, 3, 4 and 5, **characterized in that** the top and the bottom of the first column include one Elementary Graphic Point, having a variable size, more than the other columns of the same symbol.

7. An information encoding method according to claims 1, 2, 3, 4, 5 and 6, **characterized in that** the upper part (A) of a symbol has several different representations for designing, each, a different group of symbols.

8. An information encoding method according to the preceding claims, **characterized in that** one representation of the symbol head comprises, in the first column, two Elementary Graphic Points, another one comprises three Points and yet another one comprises four Points, having a size similar to or different from that of the next columns.

9. An information encoding method according to claims 1, 2, 3 and 4, **characterized in that** the Elementary Graphic Points are of n different colors or n shades of gray constituting an n radix numeration, with n being an integer greater than or equal to 2.

10. An information encoding method according to one of the preceding claims, **characterized in that** the columns I, II and III have different widths with respect to each other and a different spacing.

11. An information encoding method according to one of the preceding claims, **characterized in that** each elementary graphic point corresponds to one bit in a machine representation.

## Patentansprüche

1. Verfahren zum Codieren der Information auf der Grundlage von jeweils unabhängigen Symbolen, **dadurch gekennzeichnet, daß** sie Elemente der Beschreibung und Kontrolle ihrer eigenen Konstruktion enthalten, und daß sie Zahlen, Zahlenreihen oder Kennungen darstellen und aus mindestens zwei angrenzenden Spalten bestehen, die aus Grundlegenden Graphikpunkten gebildet werden, die mit Werten belegt sind, die von der Position oder Zone abhängen, die sie in der Spalte einnehmen.

2. Verfahren zum Codieren der Information nach Anspruch 1, **dadurch gekennzeichnet, daß** in jedem Symbol und insbesondere in einer gleichen Spalte mehrere Codierzonen mit individuellen Bedeutungen nebeneinander existieren, die vermittels von Wertskalen mit ihren Kodifizierungen definiert sind.

3. Verfahren zum Codieren der Information nach einem beliebigen der vorstehenden Ansprüche 1 und 2, **dadurch gekennzeichnet, daß** die vorgenannten Zonen Skalen für die Schwankung von binären und steigenden Werten in der Richtung von oben nach unten besitzen.

4. Verfahren zum Codieren der Information nach einem beliebigen der vorstehenden Ansprüche 1, 2 und 3, **dadurch gekennzeichnet, daß** zumindest eine Spalte beschreibende und Kontrollelemente des betrachteten Symbols trägt, darunter die Anzahl Grundlegender Graphikpunkte und die Parität der Anzahl Intervalle der Spalte, die die Information codieren.

5. Verfahren zum Codieren der Information nach den vorstehenden Ansprüchen, **dadurch gekennzeichnet, daß** die Symbole aus drei Spalten zusammengesetzt sind, wobei die dritte die Information anders als die zweite codiert.

6. Verfahren zum Codieren der Information nach einem beliebigen der vorstehenden Ansprüche 1, 2, 3, 4 und 5, **dadurch gekennzeichnet, daß** die erste Spalte oben und unten einen Grundlegenden Graphikpunkt variabler Größe und zusätzlich zu den anderen Spalten des gleichen Symbols umfaßt.

7. Verfahren zum Codieren der Information nach einem beliebigen der vorstehenden Ansprüche 1, 2, 3, 4, 5 und 6, **dadurch gekennzeichnet, daß** der obere Teil (A) eines Symbols mehrere verschiedene Darstellungen für die jeweilige Bezeichnung einer anderen Symbolgruppe hat.

8. Verfahren zum Codieren der Information nach den vorstehenden Ansprüchen, **dadurch gekennzeichnet, daß** eine Darstellung des Symbolkopfes in der ersten Spalte zwei Grundlegende Graphikpunkte umfaßt, eine andere drei Punkte und noch eine andere vier Punkte gleicher Größe oder anderer Größe als diejenigen der nachfolgenden Spalten.

9. Verfahren zum Codieren der Information nach einem beliebigen der vorstehenden Ansprüche 1, 2, 3 und 4, **dadurch gekennzeichnet, daß** die Grundlegenden Graphikpunkte n verschiedene Farben oder n Grautöne haben, die eine Basis der Numerierung mit Basis n bilden, wobei n eine ganze Zahl über oder gleich 2 ist.

10. Verfahren zum Codieren der Information nach einem beliebigen der vorstehenden Ansprüche, **dadurch gekennzeichnet, daß** die Spalten I, II und III untereinander verschiedene Breiten und unterschiedliche Abstände haben.

11. Verfahren zum Codieren der Information nach einem beliebigen der vorstehenden Ansprüche, **dadurch gekennzeichnet, daß** jeder Grundlegende Graphikpunkt einem Bit in einer Maschinendarstellung entspricht.
